# EUROPÄISCHE PATENTSCHRIFT

(11) **EP 0 943 947 B1**
(45) Veröffentlichungstag und Bekanntmachung des Hinweises auf die Patenterteilung: **03.09.2003**
(21) Anmeldenummer: 99102482.9
(22) Anmeldetag: 10.02.1999
(51) Int. Cl.: G02B 7/188, G02B 26/08

(54) **Aktiver Spiegel**
Active mirror
Miroir actif

(30) Priorität: 19.03.1998 DE 19812021
(43) Veröffentlichungstag der Anmeldung: 22.09.1999
(73) Patentinhaber: Carl Zeiss, 89518 Heidenheim (Brenz) (DE); Carl-Zeiss-Stiftung, trading as Carl Zeiss, 89518 Heidenheim (Brenz) (DE)
(72) Erfinder: Höller, Frank Dr., 73434 Aalen (DE)

(56) Entgegenhaltungen:
- EP-A- 0 073 882
- DE-A- 3 808 150
- US-A- 3 742 234
- US-A- 4 093 351
- US-A- 4 655 563
- US-A- 5 535 043

## Beschreibung

Die Erfindung betrifft einen aktiven Spiegel mit einer verspiegelten Membran, einer Fassung und mindestens einem Aktuator nach dem Oberbegriff des Anspruchs 1.

Derartige Spiegel sind z.B. aus US 5,204,784 A und DE 35 02 024 C2 bekannt. Die bekannten Konstruktionen sehen vor, daß sich der oder die Aktuatoren gegen steife Strukturen abstützen.

Als Membran werden dünne flächige Gebilde verstanden, deren Biegesteifigkeit gegenüber der Zugfestigkeit gering ist, wie sie z.B. als deformierbares Spiegelelement in o.g. Schriften vorgesehen sind.

Verwendung finden derartige aktive Spiegel z.B. als Laserspiegel und als Teil von Mikrolithographie-Projektionsbelichtungsanlagen; aber auch z.B. bei astronomischen Teleskopen.

Aufgabe der Erfindung ist es, den Aufbau eines aktiven Spiegels für höchste Präzisionsanforderungen, insbesondere hinsichtlich der Konstanz der Scheitelposition des Spiegels, also Minimierung von Dezentrierung, Defokussierung und Verkippung, anzugeben.

Die Lösung gelingt mit einem gattungsgemäßen Spiegel mit den Merkmalen des Anspruchs 1. Durch die Anbindung der Aktuatoren an eine zweite Membran als Abstützung wird von der etablierten festen Bezugsbasis für die Deformation der Spiegel-Membran abgegangen.

Insbesondere für Anordnungen mit mehreren Aktuatoren wird erreicht, daß die Einleitung von Momenten oder seitlichem Schub, der durch die Ausdehnung oder Kontraktion der Membran bei fester Stütze erzeugt wird, reduziert und insbesondere durch die Symmetrisierung minimiert wird.

Auch die kennzeichnende Maßnahme des Anspruchs 7 ist vorteilhaft zur störungsfreien Deformation, da die Einleitung von Biegemomenten unterbunden wird. Eine weitere vorteilhafte Ausführungsform beschreibt Anspruch 2.

Näher erläutert wird die Erfindung anhand der Zeichnungen:
- Figur 1a: zeigt schematisch im Längsschnitt einen erfindungsgemäßen Spiegel;
- Figur 1b: zeigt zu Figur 1a einen Querschnitt;
- Figur 2a: zeigt ein zweites Ausführungsbeispiel schematisch im Längsschnitt;
- Figur 2b: zeigt zu Figur 2a einen Querschnitt.

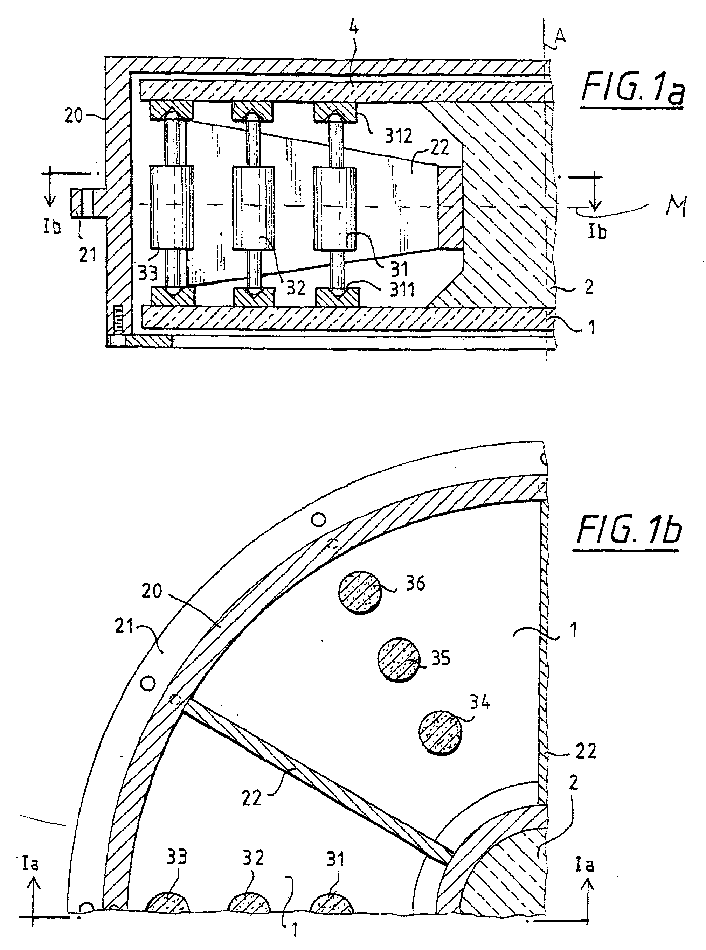

Der aktive Spiegel der Figur 1a und 1b besteht aus der verspiegelten Membran 1 und der Fassung, die hier aus einer zentralen Säule 2 mit sternförmig nach außen gerichteten Haltestegen 21, 22 und einem topfförmigen Schutzgehäuse 20 mit Anschlußflansch 21 besteht. Der verspiegelten Membran 1 gegenüberliegend ist eine zweite Membran 4 angeordnet. Zwischen beiden sind die Aktuatoren 31-36 angeordnet, die sich jeweils über Kugelgelenke 311, 312 abstützen. Das Ganze ist spiegelsymmetrisch zur Supportebene M.

Beide Membranen 1 und 4 sind Gleichteile, üblicherweise aus Glaskeramik (Zerodur (R) von Schott), nur ist die zweite Membran 4 an der Oberfläche nur geläppt, während die verspiegelte Membran 1 optisch feinpoliert und mit geeigneten dünnen Schichten belegt ist. Auch die zentrale Säule 2 der Fassung ist vorzugsweise aus Glaskeramik gefertigt, da sonst die Effekte der Wärmeausdehnung zu störender Deformation der spiegelnden Membran 1 führen würden.

Als Aktuatoren 31-36 sind piezoelektrische Translatoren vorgesehen, bewährte Element mit hoher Auflösung des Stellweges. Sie alle sind zur Supportebene M senkrecht angeordnet.

Verlängert sich ein Aktuator, z.B. 31-36, verbiegt sich also die verspiegelte Membran 1, so verkürzt sich zwangsläufig der Abstand der Andruckstelle (Kugelgelenk 311) von der optischen Achse A. Wäre wie bisher üblich das andere Ende mit dem Kugelgelenk 312 auf einem steifen Fundament gelagert, so würde daraus eine Kippung des Aktuators 31 resultieren und damit die Entstehung einer seitwärtigen radialen Kraftkomponente auf die verspiegelte Membran 1.

Da die Aktuatoren 31-36 aber auf eine ebenfalls elastische Membran 4 abgestützt sind, die sich ebenfalls verbiegt, ist dieser Effekt reduziert und in dem dargestellten Fall, wo die beiden Membranen 1 und 4 mechanisch gleiche Eigenschaften haben, wird die Kippung vollständig vermieden und es tritt nur ein Parallelversatz ein.

Der Stellweg der Aktuatoren 31-36 wirkt durch diese Anordnung zwar nur zur Hälfte als Deformation der spiegelnden Membran 1, dafür wird jedoch die Auflösung verdoppelt und die Störung durch thermische Ausdehnung der Aktuatoren 31-36 halbiert.

Durch die Ausbildung der Fassung mit der zentralen Säule 1 als Gegenstütze zu den Aktuatoren 31-36 werden ebenfalls mehrere Vorteile erreicht: Die Lage der Spiegelmitte (Spiegelscheitel bei gekrümmten Spiegeln) ist unabhängig von der Deformation durch die Aktuatoren 31-36.

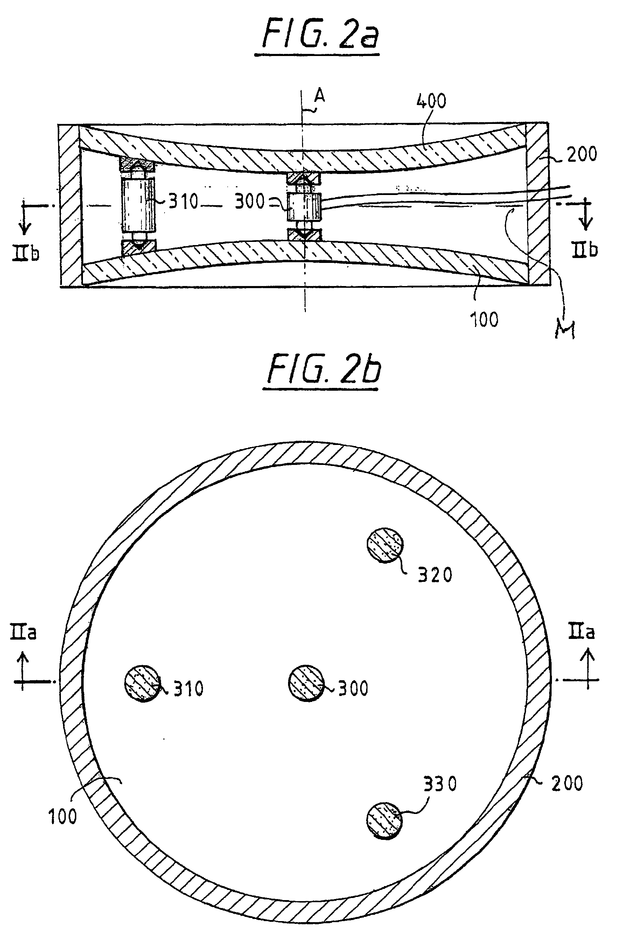

Das die Lage der spiegelnden Membran 1 definierende Teil (2) ist kompakt und daher nicht anfällig gegen Temperaturgradienten. (Ein Fassungsring (vgl. Figur 2a/b) wäre dagegen durch Temperaturgradienten leichter für Längendifferenzen zwischen gegenüberliegenden Stellen und damit für Kippungen der spiegelnden Membran anfällig).

Die Abmessungen der spiegelnden Membran 1 liegen beispielsweise bei 5 bis 20 cm Durchmesser bei einer Dicke von 3 bis 10 mm. Die vorgesehenen Stellwege der Aktuatoren 31-36 liegen in der Größenordnung zwischen 2 und 10² nm.

Ein anderes Ausführungsbeispiel zeigen Figur 2a und 2b. Hier ist die verspiegelte Membran 100 als Konkavspiegel ausgeführt, entsprechend geformt ist die zweite Membran 400. Gefaßt sind beide am Rand mit einem Ring 200. Auch hier ist die Supportebene M die Spiegel-Symmetrieebene.

Hier kann bereits mit einem auf der optischen Achse A liegenden Aktuator 300 eine zentralasymmetrische Deformation der spiegelnden Membran 100 erreicht werden, deren Scheitel sich dann aber axial verschiebt. Weitere Aktuatoren 310, 320, 330 sind symmetrisch über die Fläche der spiegelnden Membran 100 verteilt parallel zur optischen Achse A und senkrecht zur Supportebene M angeordnet.

Man sieht, daß das erfindungsgemäße Prinzip der weichen Abstützung der Aktuatoren zur Erhaltung ihrer Achsrichtung unabhängig von ihrer Länge für vielfältige Spiegelformen, wie sie in der Optik benötigt werden, eingesetzt werden kann. Auch ist die zugehörige Fassungstechnik nicht an die vorgestellten Formen gebunden, wie auch beliebige Translatoren als Aktuatoren in Frage kommen.

Besonders für hohe Präzisionsanforderungen bei kleinen Deformationen der Größenordnung 10² nm und darunter findet die erfindungsgemäße Anordnung ihren bevorzugten Einsatz.

## Patentansprüche

1. Aktiver Spiegel mit einer ersten verspiegelten Membran (1) und mit einer zweiten gegenüberliegenden Membran (4), wobei die erste verspiegelte Membran (1) durch mindestens einen Aktuator (31-36) deformierbar ist, welcher an die zweite Membran (4) als Abstützung angebunden ist,
**dadurch gekennzeichnet,**
**dass** sowohl die erste Membran (1) als auch die zweite Membran (4) mit einer Fassung (2, 20, 21, 22, 200) derart verbunden sind, dass die Fassung als Gegenstütze zu dem mindestens einen Aktuator (31-36) ausgebildet ist.

2. Spiegel nach Anspruch 1, **dadurch gekennzeichnet, dass** die Fassung (2, 20, 21, 22) einen auf einer optischen Achse (A) liegenden Pfeiler (2) umfasst, mit dem die beiden Membranen (1, 4) verbunden sind.

3. Spiegel nach Anspruch 2, **dadurch gekennzeichnet, dass** der Pfeiler (2) aus Glaskeramik ist.

4. Spiegel nach Anspruch 2 oder 3, **dadurch gekennzeichnet, dass** die Fassung (2, 20, 21, 22) sternförmig nach außen gerichtete Haltestege (22) umfasst, welche den Pfeiler (2) tragen.

5. Spiegel nach Anspruch 4, **dadurch gekennzeichnet, dass** die Fassung (2, 20, 21, 22) ein Schutzgehäuse (20) mit einem Anschlussflansch (21) umfasst, an welchem die Haltestege (22) befestigt sind.

6. Spiegel nach einem der Ansprüche 1 bis 5, **dadurch gekennzeichnet, dass** die Aktuatoren (31-36) derart an die beiden Membranen (1,4) als Abstützung angebunden sind, dass sie ausschließlich an ihren Angriffspunkten (311, 312) gehalten werden.

7. Spiegel nach mindestens einem der Ansprüche 1 bis 6, **dadurch gekennzeichnet, dass** die Aktuatoren (31-36) über Kugelgelenke (311, 312) an den Membranen (1, 4) abgestützt sind.

8. Spiegel nach mindestens einem der Ansprüche 1 bis 7, **dadurch gekennzeichnet, dass** die zweite Membran (4) gleiche mechanische Eigenschaften wie die verspiegelte Membran (1) hat, so dass sich die beiden Membranen (1,4) durch die Aktuatoren (31-36) gleichermaßen verbiegen.

9. Spiegel nach mindestens einem der Ansprüche 1 bis 8, **dadurch gekennzeichnet, dass** die zweite Membran (4) die gleichen Abmessungen wie die verspiegelte Membran (1) aufweist und aus dem gleichen Material, insbesondere Glaskeramik, wie die verspiegelte Membran (1) ist.

10. Spiegel nach mindestens einem der Ansprüche 1 bis 9, **dadurch gekennzeichnet, dass** die zweite Membran (4) zur verspiegelten Membran (1) spiegelsymmetrisch ist

11. Spiegel nach mindestens einem der Ansprüche 1 bis 10, **dadurch gekennzeichnet, dass** eine Supportebene (M) vorhanden ist und alle Aktuatoren (31-36) senkrecht dazu stehen.

12. Spiegel nach mindestens einem der Ansprüche 1 bis 11, **dadurch gekennzeichnet, dass** die Angriffspunkte der Aktuatoren (31-36) drehsymmetrisch zur optischen Achse (A) auf der verspiegelten Membran (1) liegen.

## Claims

1. Active mirror with a first silvered diaphragm (1) and with a second opposite diaphragm (4), it being possible for the first silvered diaphragm (1) to be deformed by at least one actuator (31-36) which is attached to the second diaphragm (4) as a support, **characterized in that** both the first diaphragm (1) and the second diaphragm (4) are connected to a mount (2, 20, 21, 22, 200) in such a way that the mount is formed as an opposing support for the at least one actuator (31-36).

2. Mirror according to Claim 1, **characterized in that** in the mount (2, 20, 21, 22) comprises a pillar (2) which is located on an optical axis (A) and to which the two diaphragms (1, 4) are connected.

3. Mirror according to Claim 2, **characterized in that** the pillar (2) is made of glass ceramic.

4. Mirror according to Claim 2 or 3, **characterized in that** the mount (2, 20, 21, 22) comprises retaining webs (22) which are oriented outwards in a star shape and which carry the pillar (2).

5. Mirror according to Claim 4, **characterized in that** the mount (2, 20, 21, 22) comprises a protective housing (20) with a connecting flange (21) to which the retaining webs (22) are fixed.

6. Mirror according to one of Claims 1 to 5, **characterized in that** the actuators (31-36) are attached as a support to the two diaphragms (1,4) in such a way that they are held only at their points of action (311, 312).

7. Mirror according to at least one of Claims 1 to 6, **characterized in that** the actuators (31-36) are supported on the diaphragms (1, 4) via spherical joints (311, 312).

8. Mirror according to at least one of Claims 1 to 7, **characterized in that** the second diaphragm (4) has the same mechanical properties as the silvered diaphragm (1), so that the two diaphragms (1, 4) are bent to the same extent by the actuators (31-36).

9. Mirror according to at least one of Claims 1 to 8, **characterized in that** the second diaphragm (4) has the same dimensions as the silvered diaphragm (1) and is made of the same material, in particular glass ceramic, as the silvered diaphragm (1).

10. Mirror according to at least one of Claims 1 to 9, **characterized in that** the second diaphragm (4) is mirror-symmetrical with respect to the silvered diaphragm (1).

11. Mirror according to at least one of Claims 1 to 10, **characterized in that** there is a support plane (M), and all actuators (31-36) are perpendicular thereto.

12. Mirror according to at least one of Claims 1 to 11, **characterized in that** the points of action of the actuators (31-36) are located on the silvered diaphragm (1) rotationally symmetrically with respect to the optical axis (A).

## Revendications

1. Miroir actif avec une première membrane réfléchissante (1) et avec une deuxième membrane (4) située en vis-à-vis, la première membrane réfléchissante (1) pouvant être déformée par au moins un actionneur (31 - 36) relié comme appui à la deuxième membrane (4), **caractérisé en ce que** la première membrane (1) de même que la deuxième membrane (4) sont reliées par une monture (2, 20, 21, 22, 200) de telle sorte que la monture soit réalisée en forme de contre-appui pour au moins un actionneur (31 - 36).

2. Miroir selon la revendication 1, **caractérisé en ce que** la monture (2, 20, 21, 22) comprend un pilier (2) situé sur un axe optique (A), auquel les deux membranes (1, 4) sont reliées.

3. Miroir selon la revendication 2, **caractérisé en ce que** le pilier (2) est en céramique de verre.

4. Miroir selon la revendication 2 ou 3, **caractérisé en ce que** la monture (2, 20, 21, 22) comprend des traverses de maintien (22) dirigées en étoile vers l'extérieur, qui supportent le pilier (2).

5. Miroir selon la revendication 4, **caractérisé en ce que** la monture (2, 20, 21, 22) comprend un carter de protection (20) avec une bride de raccordement (21) à laquelle sont fixées les traverses de maintien (22).

6. Miroir selon une des revendications 1 à 5, **caractérisé en ce que** les actionneurs (31 - 36) sont reliés aux deux membranes (1, 4) pour appui de manière à être maintenus exclusivement à leurs points d'application (311, 312).

7. Miroir selon une au moins des revendications 1 à 6, **caractérisé en ce que** les actionneurs (31- 36) prennent appui par des articulations à rotule (311, 312) sur les membranes (1, 4).

8. Miroir selon une au moins des revendications 1 à 7, **caractérisé en ce que** la deuxième membrane (4) possède les mêmes caractéristiques mécaniques que la membrane réfléchissante (1) de telle sorte que les actionneurs (31 - 36) déforment les deux membranes (1, 4) de manière identique.

9. Miroir selon une au moins des revendications 1 à 8, **caractérisé en ce que** la deuxième membrane (4) présente les mêmes dimensions que la membrane réfléchissante (1) et qu'elle soit du même matériau que la membrane réfléchissante (1), en particulier en céramique de verre.

10. Miroir selon une au moins des revendications 1 à 9, **caractérisé en ce que** la deuxième membrane (4) présente une symétrie miroir par rapport à la membrane réfléchissante (1).

11. Miroir selon une au moins des revendications 1 à 10, **caractérisé en ce qu'**il existe un plan de support (M) et que tous les actionneurs (31 - 36) lui sont perpendiculaires.

12. Miroir selon une au moins des revendications 1 à 11, **caractérisé en ce que** les points d'application des actionneurs (31 - 36) se trouvent sur la membrane réfléchissante (1) selon une symétrie de rotation par rapport à l'axe optique (A).
